# EUROPEAN PATENT APPLICATION

(11) **EP 4 761 472 A1**
(43) Date of publication of application: **17.06.2026**
(21) Application number: 24219773.9
(22) Date of filing: 13.12.2024
(51) Int. Cl.: H05B 47/20, F21S 41/20, F21S 41/64, F21S 43/20, G02F 1/1334

(54) **LIGHTING DEVICE FOR AN AUTOMOBILE COMPRISING A CONTROLLABLE MULTI SEGMENT DIFFUSION SCREEN**

(71) Applicant: Valeo Vision, 93012 Bobigny Cedex (FR)
(72) Inventor: KRICK, Sebastian, 93012 BOBIGNY CEDEX (FR)
(74) Representative: Valeo Visibility

(57) **Abstract**

Lighting device for an automobile comprising a controllable diffusion screen having multiple segments, wherein measurement of the load current allows to reliably detect optical defects in at least one of the plurality of segments. A corresponding diagnostic method is also provided.

## Description

### TECHNICAL FIELD

The present invention relates to controllable diffusion screens used for lighting devices of automobiles, and more particularly to the means for detecting an optical defect within a multi segment controllable diffusion screen of such lighting devices.

### BACKGROUND

The field of lighting and/or light signalling for automobiles is subject to regulations that require each automobile to be equipped with lights that fulfil specific safety functions, including signalling lights, low beam lights, and high beam lights. Signalling lights are generally used to convey information to other road users without providing illumination of the road that is directly useful to the driver of the vehicle, such as turn indicators or daytime running lights, DRL. Low beam lights allow the driver of an automobile to be seen by other users and to properly see the road up to 50 or even 75 meters, without dazzling other road users. High beam lights, on the other hand, allow the driver to properly see the road up to 100 meters, but they may dazzle other road users. They should only be activated outside of urban areas and when no other road user is present in front of the automobile.

In an effort to provide compact lighting means for an automobile, it is sought to group within the same headlamp the different means enabling the implementation of these signalling and lighting functions. It may be desirable for automobile manufacturers or equipment suppliers to have a common optical element for each of these functions, for example in the form of a transparent or translucent screen closing the headlamp housing and from which the light rays forming one or the other of the lighting or signalling beams emerge.

In this context of a common optical element, it is also desirable to provide a similar sized lighting surface from one function to another, particularly for reasons of aesthetics and visual identity of the lighting means. The different characteristics of the lighting and/or signalling functions complicate this endeavour, with on the one hand the directive nature that a lighting beam must respect and on the other hand the diffuse nature that a signalling beam presents. The presence of diffusing means to generate this signalling beam can hinder the propagation of rays intended for the formation of a regulatory lighting beam.

To this end, a known solution consists of placing a controllable diffusion screen against the optical element of a lighting device of an automobile. Such a controllable diffusion screen is an intelligent screen, also called a PDLC screen, for Polymer-Dispersed Liquid Crystal. A PDLC screen consists of a structure in which liquid crystals are dispersed in a polymer matrix sandwiched between two electrically conductive layers.

Such a screen structure is generally of planar form: it is a plate that can adjust its state to modulate, i.e., to allow or block the passage of light through it. The state of the screen can be changed between a transparent state and a diffusing state, the transparency of the plate forming the screen being adjusted by the application of an electric voltage in the conductive layers, which modifies the arrangement of the liquid crystals within the polymer matrix. The application of an electric voltage, or conversely its drop, allows the transition between the transparent state and the diffusing state, and this modification of the screen's transparency allows the control of light diffusion through the screen based on the reflections of light rays by the liquid crystals.

In some cases, the application of an electric voltage to the conductive layers of the screen allows the liquid crystals within the polymer matrix to be oriented in an orderly manner, substantially perpendicular to said conductive layers, so that light can pass through the polymer matrix of the screen without being deflected by the liquid crystals; the screen is then in its transparent state. Conversely, when no voltage is applied to the conductive layers of the screen, the liquid crystals within the polymer matrix are oriented in a disordered manner, each in different directions at random, so that light cannot, or at least only partially, pass through the polymer matrix of the screen. In other cases, the application of a voltage to the conductive layers of other screens, operating in a similar manner, allows the liquid crystals to be oriented in a disordered manner, and in an orderly manner when no voltage is applied to the conductive layers of the controllable diffusion screen.

The application of an electric voltage within the plate requires sandwiching the polymer matrix between two electrically conductive layers, and these layers are covered with an electrically insulating film, opposite the polymer matrix. These different successive films are pressed against each other to form said plate.

Over time, such a PDLC screen presents a risk of delamination of the different layers of films pressed against each other, such delamination being characterized by the detachment of at least one of the films relative to a neighbouring film, on at least one area bordering the contour of the plate, and resulting in an optical defect within the screen. Furthermore, other degradations may occur following the application of a mechanical or chemical stress to the plate (for example via thermoforming), such degradations being likely to cause optical defects within the screen as well. For example, the screen may remain opaque even though the applied electric voltage corresponds to a command to switch the screen to its transparent state, or vice-versa. The optimal operation of the controllable diffusion screen is then compromised, and the controllable diffusion screen has a reduced lifespan.

The lighting functions of an automobile that fulfil specific safety functions are classified at ASIL B level according to the classification and international standard ISO26262 (also called ASIL, for "Automotive Safety Integrity Level"). Such an ASIL B level notably requires the vehicle to detect any malfunction in the lighting functions. In particular, if the controllable diffusion screen is compromised due to the aforementioned degradations (typically the screen remains opaque even though the applied electric voltage corresponds to a command to switch the screen to its transparent state), the vehicle must be able to detect it.

However, controllable diffusion screens of the prior art are usually used in aesthetic or visual applications, and not in lighting and/or light signalling applications for automobiles, and, as such, are not typically equipped with diagnostic functions or optical defect detection functions. It has been proposed to monitor the intensity of the electrical current passing through a single PDLC film to detect an optical defect. Due to its structure and composition a PDLC film can be electrically assimilated to a capacitance, and it is driven by a differential voltage signal. During a varying voltage phase, the PDLC charging current is generally constant in the absence of defects. During a constant voltage phase, the PDLC current is generally zero without defects. In the presence of a defect, a leakage current is observed in the latter case, while variations are observed in the former case. A measurement system providing a gain of for example 20 may thus be used to detect a leakage current in a single PDLC film, and to conclude to an optical defect, as the leakage current and charging current have roughly a ratio of 10.

This approach has limitations, in particular for lighting systems that are equipped with large PDLC films, or with a plurality of PDLC films that are supplied with the same voltage control signal and switched on/off individually depending on the application requirements. The intensity of the PDLC current that is measured is the intensity of the electrical current passing through all of the PDLC segments that are active. When the measurement system has a high gain, the leakage current of a single faulty segment can be accurately detected. However, as there will be a very high intensity current when all segments are active, the high gain measurement and detection system's ACD will saturate in such circumstances, rendering an accurate measurement and error detection impossible. Conversely, a lower gain measurement system will accurately detect the charging current of a plurality of PDLC segments, at the expense of accurately detecting the leakage current of a single segment, for which the measurement resolution will become too low.

Dye-Doped Liquid Crystals (DDLCs) are another technology that can be used instead of the PDLC segments. These DDLC films have a relatively low power consumption and a relatively fast response. Dye-Doped Cholesteric Liquid Crystal (DDCLC) is a type of DDLC film that provides no diffusion when there is no current, and hence can also be used as black panels. When the current is supplied, they become transparent. However, the problems related to the large PDLC films or plurality of PDLC films also pertain to the DDCLC films.

There is therefore a need to have a lighting device for an automobile comprising a controllable multi-segment diffusion screen, which allows reliable detection of any optical defect within the screen.

### SUMMARY

According to a first aspect of the invention, a lighting device for an automobile is provided. The lighting device comprises:
- at least one lighting module capable of generating a light beam along a longitudinal optical axis,
- a plurality of controllable diffusion screens, each screen of said plurality of controllable diffusion screens comprising two electrically conductive layers, the plurality of controllable diffusion screens being arranged on said longitudinal optical axis, facing said at least one lighting module, and each screen being capable of modulating the diffusion of light from said at least one lighting module and passing through the screen, based on an electric current I1 capable of flowing within the conductive layers of each screen,
- a control system connected to the plurality of controllable diffusion screens, the control system comprising a driving stage of a voltage supply configured to apply a supply voltage U1 in the conductive layers of the plurality of controllable diffusion screens, for controlling the diffusion of light passing through said screens,
- measuring means for obtaining an indication of the intensity of the electric current capable of flowing in the conductive layers of the plurality of controllable diffusion screens, wherein the measuring means further comprise a circuit for adapting a measurement gain of the measuring means between at least a first G1 and a second lower measurement gain value G2, as a function of the applied supply voltage U1 value, and
- detection means for detecting a defect within the plurality of controllable diffusion screens,

wherein the measuring means are synchronized with the driving stage of the voltage supply, and
wherein the detection means are connected to the measuring means and configured to compare said indication of the intensity of the electric current I1 capable of flowing in the conductive layers of the plurality of controllable diffusion screens to a first threshold value when the first measurement gain value G1 is applied and to a second threshold value when the second measurement gain value G2 is applied, and as a result of the comparison, to detect a possible optical defect within the plurality of controllable diffusion screens.

Preferably, each controllable diffusion screen may be configured to be selectively activated by a switch mounted in series with said controllable diffusion screen.

The detection means for detecting an optical defect may preferably be configured to detect the presence of a leakage current in the plurality of controllable diffusion screens during phases PH1 where the supply voltage U1 delivered by the driving stage is constant or quasi-constant, the measuring means preferably being configured to measure the intensity of the electric current I1 during said phases PH1 where the supply voltage U1 delivered by the driving stage is constant or quasi-constant, while applying the first gain value G1.

Preferably, the first threshold value may correspond to a leakage current intensity of one of the controllable diffusion screens.

The detection means for detecting an optical defect may preferably be configured to detect the presence of at least one open load among the plurality of controllable diffusion screens, during phases PH2 where the supply voltage U1 delivered by the driving stage varies, the measuring means preferably being configured to measure the intensity of the electric current I1 during said phases PH2 where the supply voltage U1 delivered by the driving stage varies, while applying the second gain value G2.

Preferably, the second threshold may correspond to an expected load current intensity of the active controllable diffusion screens of said plurality of controllable diffusion screens.

Preferably, the detection means may include filtering and/or averaging means for the measured electric current intensity 11.

The measuring means may preferably comprise a shunt connected in series with the plurality of controllable diffusion screen for obtaining an indication of the intensity of the electric current I1 passing through the shunt.

Alternatively, the voltage supply may comprise an H-bridge topology comprising four MOSFET transistors, and the measuring means may be configured to obtain an indication of the intensity of the electric current I1 passing through one of said MOSFET transistors.

Preferably, the lighting device may be a lighting device configured to project a light beam capable of forming a lighting function of the low beam and/or high beam type; and/or a signalling device configured to project a light beam capable of forming a signalling function of the daytime running light and/or position light type.

According to another aspect of the invention, an automobile is proposed, characterized in that it comprises at least one lighting device in accordance with an aspect of the invention.

According to a further aspect of the invention, a method for detecting an optical defect in a plurality of controllable diffusion screens in a lighting device according to an aspect of the invention is proposed. The method comprises the steps of:
- by means of the voltage supply, applying a supply voltage U1 in the conductive layers of the plurality of controllable diffusion screens, for controlling the diffusion of light passing through the screens,
- using the measuring means, obtaining an indication of the intensity of the electric current I1 flowing in the conductive layers of the plurality of controllable diffusion screens;
- using the circuit, adapting a measurement gain of the measuring means between at least a first G1 and a second lower measurement gain value G2, as a function of the applied supply voltage U1 value, and
- using the detection means, detecting a defect within the plurality of controllable diffusion screens;
wherein said step of detecting comprises comparing said indication of the intensity of the electric current I1 flowing in the conductive layers of the plurality of controllable diffusion screens to a first threshold value when the first measurement gain value G1 is applied and to a second threshold value when the second measurement gain value G2 is applied, and as a result of the comparison, to detect a possible optical defect within the plurality of controllable diffusion screens.

The step of applying a supply voltage U1 in the conductive layers of the plurality of controllable diffusion screens may preferably comprise comprises sub-phases PH1 where the supply voltage U1 delivered by the driving stage is constant or quasi-constant and the steps of obtaining and adapting may preferably comprise measuring the intensity of the electric current I1 during said phases PH1 where the supply voltage U1 delivered by the driving stage is constant or quasi-constant, while applying the first gain value G1.

Preferably, the step of applying a supply voltage U1 in the conductive layers of the plurality of controllable diffusion screens may comprises sub-phases PH2 where the supply voltage U1 delivered by the driving stage varies, and the steps of obtaining and adapting preferably comprise measuring the intensity of the electric current during said phases PH2 where the supply voltage U1 delivered by the driving stage varies, while applying the second gain value.

Aspects of the invention allow to provide an automobile comprising a controllable multi-segment diffusion screen, which allows reliable detection of any optical defect within the screen. The invention allows to increase the measurement resolution as well as their accuracy. The proposed system therefore allows to detect an open load situation as well as a leakage current that is too high in lighting devices involving multiple controllable diffusion screens.

Since the measuring means are synchronized with the driving stage of a supply voltage, it becomes possible to obtain, at a given moment, the measurement of a quantity related to the electric current flowing in the conductive layers of the controllable diffusion screen with a gain that depends on the voltage supply phase, to compare the measurement with a threshold value that also depends on the voltage supply phase, and to then deduce the presence of a possible optical defect within the screen based on the result of the comparison.

The present technology and its various applications will be better understood by reading the following description and examining the accompanying figures.

### BRIEF DESCRIPTION OF THE FIGURES

The figures are presented for illustrative purposes and are not limiting.
[Fig. 1] schematically represents a lighting device for an automobile in accordance with an embodiment of the invention;
[Fig. 2] is a set of two diagrams respectively representing, as a function of time, the evolution of the electric current flowing in the plurality of controllable diffusion screens of Figure 1, and the voltage across the plurality of controllable diffusion screens, in the case where the screens do not present any optical defects;
[Fig.3] illustrates a preferred embodiment of the measuring means involving a shunt resistance, measurement device and a gain adaptation circuit, in accordance with an embodiment of the invention; [Fig. 4] provides a schematic illustration of measuring means and of a gain adaptation circuit in accordance with a preferred embodiment of the invention; and
[Fig. 5] is a flow diagram showing the main steps of an embodiment of the method in accordance with the invention.

### DETAILED DESCRIPTION

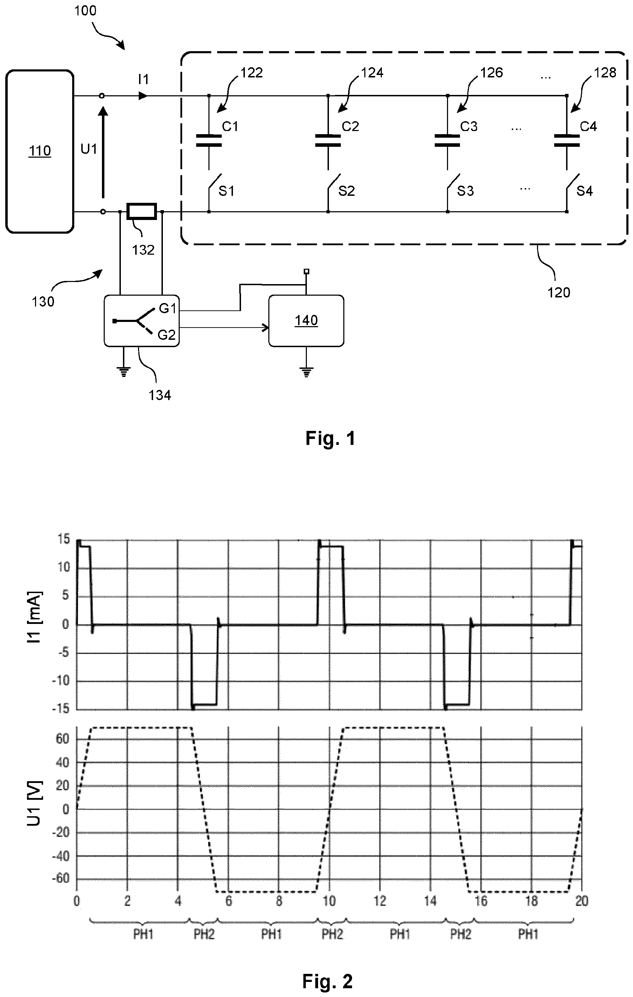

Figure 1 schematically represents a lighting device 100 for an automobile, the automobile not being represented in the figure for clarity reasons. The lighting device 100 is particularly configured to generate a lighting beam or a signalling beam primarily along a longitudinal optical axis (the lighting or signalling beam and the longitudinal optical axis are not represented for clarity reasons).

The lighting device 100 comprises at least one lighting module that is configured to generate the light beam and direct it towards an optical element (the lighting module(s) and the optical element are not represented in Figure 1 for clarity reasons). It is understood that each lighting module can project a light beam capable of forming a lighting function of the low beam and/or high beam type, and/or a signalling function of the daytime running light and/or position light type. The light beam is thus projected through the optical element to form the lighting beam capable of illuminating the road scene. The optical element thus forms a luminous surface of the lighting and signalling device, whose shape and dimensions impact the visual identity of the function.

The lighting device 100 further comprises a plurality 120 of controllable diffusion screens 122, 124, 126, 138 and a control system connected to the plurality of controllable diffusion screens 120. While a plurality of four screens is shown, it is understood that different numbers of screens are also within the scope of the present invention. The plurality of controllable diffusion screens 120 is typically placed against the optical element to form an optical block towards which the light beam is directed when the lighting module is active. The plurality of controllable diffusion screens 120 is thus arranged on the longitudinal optical axis along which the lighting or signalling beam extends, facing each lighting module. The plurality of controllable diffusion screens 120 is, for example, placed between the optical element and each lighting module, so that the optical element is turned towards the outside of the lighting device and forms the luminous surface of this device. Using multiple screens allows to cover larger optical elements, and allows for example to provide animation functions, when the screens are not activated at the same time, but sequentially.

Each controllable diffusion screen 122-128 can modulate the diffusion of light passing through it. More precisely, each controllable diffusion screen can vary between a transparent state and a diffusing or opaque state. A controllable diffusion screen as used in the plurality of controllable diffusion screens 120 comprises a PDLC screen (Polymer-Dispersed Liquid Crystal), or a DDCLC (Dye-Doped Cholesteric Liquid Crystal) screen that is electrically powered by the control system 110, as will be described later. Each controllable diffusion screen consists of a structure in which liquid crystals are dispersed in a polymer matrix sandwiched between two electrically conductive layers (the polymer matrix and the electrically conductive layers are not shown in Figure 1 for clarity reasons). These liquid crystals are components whose orientation varies under the effect of an electric field passing through the polymer matrix. More particularly, when a voltage is applied to the conductive layers of a controllable diffusion screen 122, 124, 126, 128, the liquid crystals orient themselves relative to the conductive layers of the screen. The electric current I1 flowing through each conductive layer generates an electric field within the controllable diffusion screen. Thus, an electric field is generated by the electric current I1 flowing within the conductive layers, this electric field being capable of ordering or disordering the liquid crystals within the polymer matrix. Each controllable diffusion screen is thus capable of modulating the diffusion of light from each lighting module and passing through the screen, based on the electric current I1 capable of flowing in the conductive layers of the screen.

In Figure 1, each controllable diffusion screen 122, 124, 126, 128 is represented by a capacitor C1-C4, as the electrical behaviour of such a controllable diffusion screen can be approximated to that of a capacitor. Optionally, as shown in Figure 1, each screen is associated with a dedicated switch S1-S4. The switch allows the controller to selectively activate each screen individually. As the controller is at all times aware of the number of active screens, it also has an indication of the load current that should be expected at all times.

The lighting device 100 also includes measuring means 130 for a quantity related to the electric current I1 capable of flowing in the plurality of conductive layers of the controllable diffusion screens 120 and detection means 140 for detecting an optical defect within one of the screens 122, 124, 126, 128.

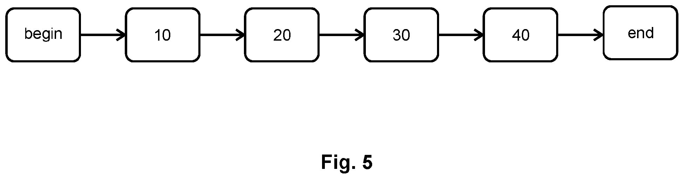

The control system 110 is designed to control the electrical power supply of the screens via electrodes (not shown) that are associated with each of the conductive layers of the screens. This corresponds to method step 10 in Figure 5. More precisely, the control system includes a driving stage of a supply voltage (of the driver type) configured to apply a supply voltage U1 in the conductive layers of the screens that are activated through switches S1-S4, thereby generating the electric current I1 for controlling the diffusion of light passing through the screens 122, 124, 126, 128. In particular, the driving stage 110 operates in such a way that it controls the screens with a differential voltage command whose polarity reverses according to a predefined driving frequency (this is to avoid damaging the screen during its different operating cycles). As illustrated in Figure 2 (bottom), the supply voltage U1 across the terminals of the controllable diffusion screens thus varies between two voltage values: a positive voltage value, for example, approximately equal to +60 V, and a negative voltage value, for example, approximately equal to -60 V.

The measuring means 130 for a quantity related to the electric current I1 are synchronized with the driving stage 110 of a supply voltage and comprise a circuit 134 that allows to adapt the measurement gain between at least two values G1, G2 as a function of the supplied voltage. In an embodiment, the measuring means 130 having the circuit 134 can be adapted for more than two gain values such as G1, G2, G3, G4 and the like, as a function of the supplied voltage or can be adapted to a fully variable gain as a function of the supplied voltage without departing from the scope of the invention. This corresponds to method steps 20 and 30 shown in Figure 5. Preferably, and as illustrated in Figure 1, the measuring means 130 are means for measuring the intensity of the electric current I1 capable of flowing in the conductive layers of the plurality of controllable diffusion screen 120. In the specific embodiment of Figure 1, the measuring means 130 for the intensity of the electric current I1 comprise a shunt 132 connected in series with the plurality of screens 120 (a shunt resistance 132 of a few Ohms, for example, around 5 Ohms) and a measuring device for the intensity of the electric current I1 passing through the shunt 132 in both directions of the electric current I1 flow. The measuring means for the intensity of the electric current I1 is preferably an integrated component. Such an integrated component is indeed referenced to ground and allows processing the differential voltage provided by the driving stage 110, without amplifying the common-mode voltage.

The detection means 140 for detecting an optical defect within the plurality of controllable diffusion screens 120 are connected to the measuring means 130 for a quantity related to the electric current I1.

The detection means 140 for detecting an optical defect are configured to compare the measurement of the indication of the intensity of the electric current I1 to a first threshold value when the first measurement gain value G1 is applied and to a second threshold value when the second measurement gain value G2 is applied, and as a result of the comparison, to detect a possible optical defect within the plurality of controllable diffusion screens 120. This corresponds to method step 40 as illustrated in Figure 5. Preferably, the detection means may comprise a microcontroller element connected to the measuring means 130. The microcontroller is notably equipped with an analog-to-digital converter. Preferably, the detection means 140 further include filtering and/or averaging means for the measured intensity of the electric current I1 (such filtering and/or averaging means are not shown in Figure 1 for clarity reasons). The filtering and/or averaging means are, for example, constituted by a low-pass filter.

With reference to Figure 2, the detection means140 having the microcontroller is configured, according to a first embodiment of the invention, to detect the presence of a leakage current in at least one of the plurality of controllable diffusion screens 120 during phases PH1 where the supply voltage U1 delivered by the driving stage 110 is constant or quasi-constant. As shown, in Figure 2, during such phases, in the absence of defects, the current passing through the screens 120 is substantially 0. If the current intensity is not 0 but above a predetermined threshold, it can be concluded to be an optical defect in at least one of the screens. To achieve this, the measurement means 130 are synchronized to the controller 110 and apply a first gain value G1 to the measurement during phases PH1. The first gain value G1 is typically high in order to detect low intensity leakage currents (of the order of 1mA). Similarly, the detection means 140 are configured to compare, during these phases PH1, the measured value of the intensity of the electric current I1 passing through the shunt 132 (or rather, preferably, the filtered and/or averaged measurement) to a first non-zero threshold value. The first threshold value is typically low, for example, in the order of 1-5 mA. If the measured value of the intensity of the electric current I1 passing through the shunt 132 is greater in absolute value than the first non-zero threshold value, then the detection means 140 detect the presence of a leakage current and thus an optical defect within at least one of the controllable diffusion screens.

Further, the microcontroller 140 is configured, according to a first embodiment of the invention, to detect the presence of an open load, i.e., a dysfunctional screen 122-128 during phases PH2 where the supply voltage U1 delivered by the driving stage 110 is varied. As shown, in Figure 2, during such phases, in the absence of defects, the charging current passing through the screens 120 is substantially constant. Figure 2 only shows the current flowing through one active screen for clarity. If the current intensity is not constant or below a predetermined threshold, it can be concluded that one of the screens is out of order. As the controller 110 is aware of the number of screens that are active at a given time, an expected charge current intensity is known. To achieve this detection, the measurement means 130 are synchronized to the controller 110 and apply a second gain value G2, typically lower than the gain value G1 to the measurement during phases PH2. The second gain value G2 is typically low in order to avoid saturation of both the measurement and detection means (which typically use an analog-to-digital converter element). Similarly, and the detection means 140 are configured to compare, during these phases PH2, the measured value of the intensity of the electric current I1 passing through the shunt 132 (or rather, preferably, the filtered and/or averaged measurement) to a second non-zero threshold value. The second threshold value is a multiple of the expected charge current, wherein the charge current is multiplied by the number of active screens within the plurality of screen at a given point in time. If the measured value of the intensity of the electric current I1 passing through the shunt 132 is lower in absolute value than the second non-zero threshold value, then the detection means 140 detect the presence of an open load among the plurality of screen 120.

Once the detection means have detected the presence of an optical defect within the plurality of controllable diffusion screens 120, it may send an alert message to an electronic control unit of the vehicle (for example, a central unit), which can in turn relay this message to the dashboard in the form of a visual and/or audible warning.

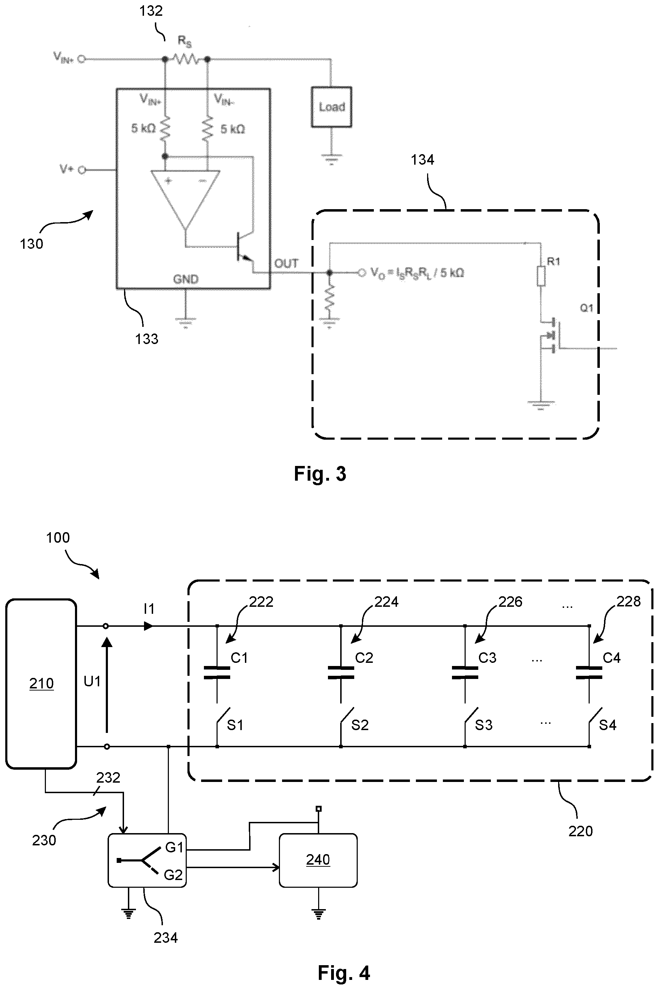

Figure 3 illustrates a preferred embodiment of the measuring means 130 involving a shunt resistance 132, measurement device 133 and a gain adaptation circuit 134. The plurality of screens is referenced as the "load". The gain adaptation circuit comprises a switching element, for example the transistor Q1 and a resistive circuit, symbolized without loss of generality by the resistance R1 that can be selectively mounted in parallel with the resistance RL through switching element. During phases PH1 when a leakage current is to be measured, the voltage V0 can be expressed as I1*Rs*RL/5k where Rs is the shunt resistance. During phases PH2 when a higher charging current is to be measured, the gain is decreased to the second value G2 by switching the resistance R1 in parallel. The voltage V0 is then expressed as I*Rs*(RL 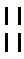 R1)/5k. Clearly, the gain values G1 and G2 can be adapted as required by choosing appropriately dimensioned resistive circuits, without departing from the scope of the present invention.

In an alternative second embodiment of the lighting device 200 in accordance with the invention shown in Figure 4, the indication of the intensity of the electrical current I1 traversing the plurality 220 of controllable diffusion screens 222, 224, 226, 228 is not acquired by shunt measurement. In this embodiment the voltage supply 210 comprises an H-bridge architecture, as is well known in the art.

An H-Bridge is an electronic circuit that allows a voltage to be applied across a load in either direction, as required in the present application. The name "H-Bridge" is derived from the typical graphical representation of the circuit, which resembles the letter "H". The H-Bridge consists of four switches (transistors or MOSFETs) that are arranged in a configuration that allows the current to flow in either direction through the motor. By closing two diagonally opposite switched of the switches at a time, the polarity of the voltage applied to the plurality of diffusion screens 220 can be reversed.

When the first pair of diagonally opposite H-bridge switches are closed and the second pair of diagonally opposite H-bridge switched are open, the current flows from the power supply, through the first close switch to the load (screens), and then through the second closed switch to the ground.2. When the second pair of diagonally opposite switches are closed (first pair open), the current flows from the power supply, the first closed switch, through the load (screens) in the opposite direction, and then through the second closed switch to the ground.

The intensity of the current that traverses the MOSFETs of the H-Bridge (referenced to the ground) is thus intensity of the load current I1 that is required by the measuring means 230. There are known H-Bridge implementations having diagnostic functions that allow the extraction of this current intensity, as for example provided in the module SLVAE49c from Texas Instruments ^{™}. The functioning of the plurality of diffusion screens 220, measuring means 230, adaptation circuit 234 and detection means 240 remain equivalent to the functioning that has been explained in detail in the context of the first embodiment here above.

The scope of protection is determined by the attached set of claims.

## Claims

1. A lighting device (100, 200) for an automobile comprising:
- at least one lighting module capable of generating a light beam along a longitudinal optical axis,
- a plurality of controllable diffusion screens (120, 220), each screen (122,124,126,128; 222,224,226,228) of said plurality of controllable diffusion screens comprising two electrically conductive layers, the plurality of controllable diffusion screens (120, 220) being arranged on said longitudinal optical axis, facing said at least one lighting module, and each screen (122,124,126,128; 222,224,226,228) being capable of modulating the diffusion of light from said at least one lighting module and passing through the screen (122,124,126,128; 222,224,226,228), based on an electric current (I1) capable of flowing within the conductive layers of each screen (122,124,126,128; 222,224,226,228),
- a control system connected to the plurality of controllable diffusion screens (120, 220), the control system comprising a driving stage (110, 210) of a voltage supply configured to apply a supply voltage (U1) in the conductive layers of the plurality of controllable diffusion screens (120), for controlling the diffusion of light passing through said screens (122,124,126,128; 222,224,226,228),
- measuring means (130, 230) for obtaining an indication of the intensity of the electric current (I1) capable of flowing in the conductive layers of the plurality of controllable diffusion screens (120, 230), wherein the measuring means (130, 230) further comprise a circuit (134, 234) for adapting a measurement gain of the measuring means between at least a first (G1) and a second lower measurement gain value (G2), as a function of the applied supply voltage (U1) value, and
- detection means (140, 240) for detecting a defect within the plurality of controllable diffusion screens (120, 220),
wherein the measuring means (130, 230) are synchronized with the driving stage (110, 210) of the voltage supply, and
wherein the detection means (140) are connected to the measuring means (130, 230) and configured to compare said indication of the intensity of the electric current (I1) capable of flowing in the conductive layers of the plurality of controllable diffusion screens (120, 220) to a first threshold value when the first measurement gain value (G1) is applied and to a second threshold value when the second measurement gain value (G2) is applied, and as a result of the comparison, to detect a possible optical defect within the plurality of controllable diffusion screens (120, 220).

2. Lighting device (100, 200) wherein each controllable diffusion screen (122,124,126,128; 222,224,226,228) is configured to be selectively activated by a switch mounted in series with said controllable diffusion screen.

3. The lighting device (100, 200) according to the previous claim, wherein the detection means (140, 240) for detecting an optical defect are configured to detect the presence of a leakage current in the plurality of controllable diffusion screens (120, 220) during phases (PH1) where the supply voltage (U1) delivered by the driving stage (110) is constant or quasi-constant, the measuring means (130) being configured to measure the intensity of the electric current (I1) during said phases (PH1) where the supply voltage (U1) delivered by the driving stage (110, 210) is constant or quasi-constant, while applying the first gain value (G1).

4. Lighting device (100, 200) according to the previous claim, wherein the first threshold value corresponds to a leakage current intensity of one of the controllable diffusion screens.

5. Lighting device (100, 200) according to any one of the preceding claims, wherein the detection means (140, 240) for detecting an optical defect are configured to detect the presence of at least one open load among the plurality of controllable diffusion screens (122,124,126,128; 222,224,226,228), during phases (PH2) where the supply voltage (U1) delivered by the driving stage (110, 210) varies, the measuring means (130, 230) being configured to measure the intensity of the electric current (I1) during said phases (PH2) where the supply voltage (U1) delivered by the driving stage (110, 210) varies, while applying the second gain value (G2).

6. Lighting device (100, 200) according to claims 2 and 5, wherein the second threshold corresponds to an expected load current intensity of the active controllable diffusion screens of said plurality of controllable diffusion screens.

7. Lighting device (100, 200) according to any one of the preceding claims wherein the detection means (140, 240) include filtering and/or averaging means for the measured electric current intensity (I1).

8. Lighting device (100) according to any one of the previous claims, wherein the measuring means (130) comprise a shunt (132) connected in series with the plurality of controllable diffusion screen (120) for obtaining an indication of the intensity of the electric current (I1) passing through the shunt (132).

9. Lighting device (200) according to any one of claims 1 to 6, wherein the voltage supply (210) comprises an H-bridge topology comprising four MOSFET transistors, and wherein the measuring means (230) are configured to obtain an indication of the intensity of the electric current (I1) passing through one of said MOSFET transistors.

10. Lighting device (100, 200) according to any one of the preceding claims,
wherein the lighting device (100, 200) is a lighting device configured to project a light beam capable of forming a lighting function of the low beam and/or high beam type;
and/or a signalling device configured to project a light beam capable of forming a signalling function of the daytime running light and/or position light type.

11. Automobile, **characterized in that** it comprises at least one lighting device (100, 200) according to any one of the preceding claims.

12. A method for detecting an optical defect in a plurality of controllable diffusion screens (120) in a lighting device (100) according to any of the preceding claims, the method comprising the steps of:
(10) by means of the voltage supply, applying a supply voltage (U1) in the conductive layers of the plurality of controllable diffusion screens (120), for controlling the diffusion of light passing through the screens (122, 124, 126, 128),
(20) using the measuring means (130), obtaining an indication of the intensity of the electric current (I1) flowing in the conductive layers of the plurality of controllable diffusion screens (120);
(30) using the circuit (134), adapting a measurement gain of the measuring means between at least a first (G1) and a second lower measurement gain value (G2), as a function of the applied supply voltage (U1) value, and
(40) using the detection means (140), detecting a defect within the plurality of controllable diffusion screens (120);
wherein said step of detecting (40) comprises comparing said indication of the intensity of the electric current (I1) capable of flowing in the conductive layers of the plurality of controllable diffusion screens (120) to a first threshold value when the first measurement gain value (G1) is applied and to a second threshold value when the second measurement gain value (G2) is applied, and as a result of the comparison, to detect a possible optical defect within the plurality of controllable diffusion screens (120).

13. Method according to claim 12 when the lighting device (100) depends on claim 3, wherein the step (10) of applying a supply voltage (U1) in the conductive layers of the plurality of controllable diffusion screens (120) comprises sub-phases (PH1) where the supply voltage (U1) delivered by the driving stage (110) is constant or quasi-constant and wherein
the steps of obtaining (20) and adapting (30) comprise measuring the intensity of the electric current (I1) during said phases (PH1) where the supply voltage (U1) delivered by the driving stage (110) is constant or quasi-constant, while applying the first gain value (G1).

14. Method according to any one of claims 12 or 13, when the lighting device (100) depends on claim 5, wherein the step (10) of applying a supply voltage (U1) in the conductive layers of the plurality of controllable diffusion screens (120) comprises sub-phases (PH2) where the supply voltage (U1) delivered by the driving stage (110) varies, and wherein the steps of obtaining (20) and adapting (30) comprise measuring the intensity of the electric current (I1) during said phases (PH2) where the supply voltage (U1) delivered by the driving stage (110) varies, while applying the second gain value (G2).
